# EUROPÄISCHE PATENTSCHRIFT

(11) **EP 3 215 236 B1**
(45) Veröffentlichungstag und Bekanntmachung des Hinweises auf die Patenterteilung: **04.01.2023**
(21) Anmeldenummer: 15820815.7
(22) Anmeldetag: 05.11.2015
(51) Int. Cl.: A62C 4/00

(54) **FLAMMENSCHUTZFILTER AUS EINER ANZAHL VON SCHICHTENFOLGEN SOWIE ANORDNUNGEN VON FLAMMENSCHUTZFILTERN UND DEREN VERWENDUNG**
FLAME-GUARD FILTER COMPOSED OF A NUMBER OF LAYER SEQUENCES, AND ARRANGEMENTS OF FLAME-GUARD FILTERS AND THEIR USE
FILTRE PARE-FLAMME CONSTITUÉ D'UN CERTAIN NOMBRE DE SÉRIES DE COUCHES ET AGENCEMENTS DE FILTRES PARE-FLAMME ET LEUR UTILISATION

(30) Priorität: 06.11.2014 DE 102014116149
(43) Veröffentlichungstag der Anmeldung: 13.09.2017
(73) Patentinhaber: R. Stahl Schaltgeräte GmbH, 74638 Waldenburg (DE)
(72) Erfinder: Barz, Ines, 99510 Apolda (DE); Arnhold, Thorsten, 74629 Pfedelbach (DE)
(74) Vertreter: Oehmke, Volker
(86) Internationale Anmeldenummer: PCT/DE2015/100471
(87) Internationale Veröffentlichungsnummer: WO 2016/070874

(56) Entgegenhaltungen:
- EP-A2- 0 375 455
- AT-B- 132 793
- AT-B- 132 793
- CN-A- 1 209 345
- DE-U1-202011 050 194
- GB-A- 2 464 155
- US-A- 4 484 690
- US-A- 5 165 484

## Beschreibung

Die Erfindung betrifft einen Flammenschutzfilter, wie dieser gattungsgemäß aus der DE 20 2011 050 194 U1 bekannt ist. Die Erfindung betrifft außerdem Anordnungen mindestens zweier Flammenschutzfilter, Verwendungen von Flammenschutzfiltern und Anordnungen sowie druckfeste Gehäuse mit wenigstens einem Flammenschutzfilter.

In verschiedenen technischen Anlagen kann es lokal zur ungewollten Ansammlung von explosionsfähigen Gasen, Gasgemischen und / oder Nebeln (Aerosole) kommen. Bei deren Entzündung entsteht neben einem schnell ansteigenden Explosionsdruck zumeist auch eine Flamme. Durch eine solche Flamme oder bereits durch erhöhte Temperaturen von Bauelementen, denen durch eine Entzündung oder Explosion Wärmeenergie übertragen wird, kann es zu Folgereaktionen, wie nachfolgenden Entzündungen an anderen Bereichen der betreffenden Anlage, kommen.

Elektrische Betriebsmittel in gefährdeten Bereichen solcher Anlagen, an denen zündfähige Stoffe oder Stoffgemische in explosionsfähigen Konzentrationen auftreten können, werden explosionsgeschützt ausgeführt. Dafür genutzte Gehäuse gelten als druckfest gekapselt im Sinne des Explosionsschutzes, wenn eventuell im Inneren des Gehäuses auftretende Explosionen nicht zu Zündungen außerhalb des Gehäuses führen und die Gehäuse wenigstens einer Explosion mit einem erwarteten Verlauf und Spitzenwerten der Druckverhältnisse widerstehen.

Es ist ebenfalls möglich, dass überhöhte Druckwerte im Gehäuse durch geeignete technische Maßnahmen vermieden werden. Solche Maßnahmen können beispielsweise in der Ausbildung von Spalten, beweglichen Verschlussmitteln und / oder Filteranordnungen bestehen, durch die hindurch ein Anteil des entstehenden und / oder entstandenen Explosionsgases aus dem Gehäuse austreten kann.

Bei der Konstruktion explosionsgefährdeter Anlagen ist daher besonders darauf zu achten, dass bei einer Explosion eine dadurch verursachte Druckerhöhung so abgeschwächt wird, dass es zu keiner ungewollten Beschädigung von Teilen der Anlage sowie von Menschen und Tieren kommt, die sich im Bereich der explosionsgefährdeten Anlage aufhalten. Außerdem sollen entstehende Flammen vor einem Austreten aus einem explosionsgeschützten Bereich der Anlage sicher gelöscht werden. Zugleich muss sichergestellt werden, dass nach außen weisende Oberflächen des explosionsgeschützten Gehäuses durch die Explosion und Wärmeleitung nicht so stark erwärmt werden können, dass es infolge einer solchen Erwärmung zu einer erneuten Entzündung außerhalb des explosionsgeschützten Bereiches kommen kann. Durch eine Vermeidung des Austritts von Flammen und eine hinreichende Abkühlung des austretenden (Explosions-)Gases sowie eine Vermeidung von Erwärmungen der äußeren Oberflächen über eine zulässige Temperatur wird ein sogenannter Zünddurchschlag verhindert.

Besondere Anforderungen an die Konstruktion explosionsgeschützter Gehäuse bestehen dann, wenn sich bewegende Bauteile, beispielsweise rotierende Wellen, durch wenigstens eine Wand des Gehäuses geführt werden müssen.

In der DE 198 26 911 C2 ist ein Verfahren zur Führung von Explosionsgasen beschrieben, die im Inneren eines explosionsgeschützten Gehäuses auftreten. Zum Herausführen einer Welle aus dem Gehäuseinneren ist um die Welle ein Wellenabdichtspalt ausgebildet. Im Falle einer Explosion wird ein Zünddurchschlag dadurch vermieden, dass die Menge an Explosionsgasen, die in den Spalt eintreten, begrenzt wird. Eine solche Begrenzung wird durch im Gehäuseinneren angeordnete Strömungsteiler oder durch eine großflächige Verteilung von durch den Spalt hindurchgetretenen Explosionsgasen oder gezielte Strömungswiderstände erzeugt oder die Kühlung der durch den Spalt hindurchgetretenen Explosionsgase wird mittels ganz oder teilweise gasdurchlässigen und abkühlend wirkenden Körpern erreicht. Die vorgenannten Maßnahmen können auch miteinander kombiniert sein. Außerdem können mit Flammensperren versehene Entlastungsöffnungen vorhanden sein. Solche Entlastungsöffnungen sind mit porösem und gut wärmeleitendem Material verschlossen. Durch die Entlastungsöffnungen kann Gas austreten und somit kann die Ausbildung von unerwünschten Druckspitzen vermieden oder zumindest zeitlich begrenzt werden.

Eine weitere Möglichkeit zur Vermeidung von Zünddurchschlägen ist in der EP 1 081 493 A1 beschrieben. Dabei ist eine Gehäuseabdeckung durch einen Flammenschutzfilter aus einem Metallfaservlies und ein äußeres Stützgitter gebildet, das auf dem Metallfaservlies angeordnet ist. Hergestellt wird das Metallfaservlies aus Metallfasern mit Stärken bis 100 µm, die zu einem Wirrfaservlies geschichtet, gesintert und gewälzt werden. Das Metallfaservlies weist eine enge Porengrößenverteilung bei einer gleichzeitig hohen Durchströmbarkeit auf. Während das äußere Stützgitter der Gewährleistung und dem Erhalt der mechanischen Stabilität des Flammenschutzfilters dient, wird eine auftreffende Flammenfront durch Verwirbelungen sowie durch ein intensives In-Kontakt-Treten mit den Metallfasern des Metallfaservlieses von der Druckwelle der Explosion getrennt und abgekühlt. In dem Metallfaservlies kann ein inneres Stützgitter eingearbeitet sein, das zudem eine andere Maschenweite als das äußere Stützgitter aufweisen kann.

In der EP 1 240 923 B1 ist ein Flammensperrbauteil (fortan als Flammenschutzfilter oder auch kurz als Schutzfilter oder auch nur als Filter bezeichnet) offenbart, das als ein Flammensperrelement eine Wicklung aus alternierend angeordneten glatten und geriffelten Bändern aufweist. Die Bänder sind etwa 10 mm breit, wodurch ein jedes solches Flammensperrelement eine Dicke von wenigstens 10 mm besitzt. Durch das geriffelte Band weist das Flammensperrelement Maschenweiten zwischen 0,1 und 1,5 mm auf. Auf dem Flammensperrelement sind jeweils Abstandselemente angeordnet, durch die ein Zwischenraum zwischen benachbarten Flammensperrelementen sichergestellt ist. Die Abstandselemente können durch Stäbe aus Metall, aber auch aus einem Metallgitter oder einem Metallgewebe gebildet sein. In jedem Fall sind die Abstandselemente wenigstens punktuell mit jeweils einem Flammensperrelement fest verbunden, insbesondere mit diesem verschweißt. In einem Flammensperrbauteil werden mehrere Abfolgen von Flammensperrelementen und Abstandselementen angeordnet. Infolge der festen Verbindung der Abstandselemente mit je einem Flammensperrelement ist eine hohe Stabilität des gesamten Flammensperrbauteils auch dann gewährleistet, wenn infolge des Explosionsdrucks hohe Kräfte auf die Flammensperrelemente wirken. Die langen Wege, die von einem Explosionsgas bei einem Durchtritt durch ein solches Flammensperrbauteil zurückzulegen sind, sowie die dabei auftretenden Verwirbelungen in den Zwischenräumen und Abkühlungen durch Wärmeleitung und Wärmeübertragung auf die Flammensperrelemente gewährleisten eine Druckentlastung bei gleichzeitigem Schutz vor einem Flammendurchschlag. Nachteilig an dieser Lösung ist die erforderliche große Baulänge des Flammensperrbauteils.

Eine Druckentlastungsvorrichtung für ein explosionsgeschütztes Gehäuse gemäß der DE 10 2010 016 782 A1 weist einen porösen Körper auf, der an seinem Rand einen Porenverschluss besitzt, um ein seitliches Umschlagen des so gebildeten Flammenschutzfilters durch Flammen oder heiße Gase zu verhindern. Der poröse Körper kann unter anderem aus mehreren übereinander angeordneten Gittern bestehen. Die Gitter wiederum können aus Metall oder anderen temperaturbeständigen Materialien bestehen und voneinander verschiedene Maschenweiten aufweisen.

Eine Anzahl von einzelnen Flammenschutzelementen (fortan: Filterschicht) in Form von metallischen Gittern unterschiedlicher Maschenweite zur Druckentlastung und zur Verhinderung eines Flammendurchschlags sind in einer Druckentlastungsvorrichtung gemäß der vorbenannten DE 20 2011 050 194 U1 beschrieben. Dabei werden mehrere Lagen von Metallgeweben übereinander zu einer Flammendurchschlagsicherung (fortan: Flammenschutzfilter) angeordnet. Ein Explosionsgas durchströmt den Flammenschutzfilter im Falle einer Explosion in einer Entlastungsrichtung. Dabei sind die Maschenstrukturen (fortan: Maschenweiten) der Filterschichten in Entlastungsrichtung kleiner werdend gewählt. Das in Entlastungsrichtung den Flammenschutzfilter durchströmende Explosionsgas wird dabei zunehmend verwirbelt und gelangt mit der zunehmenden Oberfläche der die kleineren Maschenweiten aufweisenden Filterschichten in Kontakt und kühlt ab. Infolge des geringen Strömungsverlustes des Flammenschutzfilters ist zugleich eine wirksame Druckentlastung gewährleistet. Der Anzahl von Filterschichten ist zusätzlich ein Verschlussmittel vorgeordnet, durch dessen Wirkung ein Eintritt von Gasen, Nebeln oder Flüssigkeiten von außen in den Flammenschutzfilter verhindert wird. Das Verschlussmittel wird bei auftretenden erhöhten Drücken, beispielsweise bei Explosionen, geöffnet.

Mit der CN 1 209 345 A wird eine Brand- und Explosionsschutzkomponente aus Sinter-Metalldrahtnetz mit Mikroöffnungen offenbart. Es wird ein dreischichtiger Sinterverbund aus oberer, mittlerer und unterer Schicht, nämlich Schutzschicht, Betriebsschicht und Stützschicht vorgeschlagen, wobei die Betriebsschicht einen effektiven Öffnungsdurchmesser von 20 bis 120 Mikrometern mit 7 bis 25 Drahtnetzschichten und eine Dicke von 2 bis 8 Millimetern aufweist, die Schutzschicht einen effektiven Öffnungsdurchmesser von 0,1 bis 2 Millimetern mit 0 bis 1 Drahtnetzschichten und eine Dicke von 0 bis 1 Millimetern aufweist, während die Stützschicht einen effektiven Öffnungsdurchmesser von größer 200 Mikrometern mit 0 bis 4 Drahtnetzschichten und einer Dicke von 0 bis 3 Millimetern aufweist.

Allgemein können die an Druckentlastungsvorrichtungen gestellten Anforderungen durch eine Reduzierung eines auftretenden erhöhten Gasdrucks in einem Inneren eines Gehäuses, die Verhinderung eines Zünddurchschlags, die Einhaltung der geforderten maximal zulässigen Oberflächentemperaturen, insbesondere auf den äußeren Oberflächen des Gehäuses und des Flammenschutzfilters, die Gewährleistung der notwendigen mechanischen Stabilität im Lastfall sowie eine Beständigkeit über mehrere Lastfälle (mehrere Explosionsereignisse) zusammengefasst werden.

Bei den aus dem Stand der Technik bekannten Lösungen werden entweder vergleichsweise aufwendig herzustellende Materialien als Bestandteile von Flammenschutzfiltern eingesetzt oder es sind große Baulängen der Flammenschutzfilter erforderlich, um eine hinreichende Sicherheit gegen einen Zünddurchschlag zu gewährleisten. Große Baulängen schränken jedoch die Einsatzmöglichkeiten solcher Flammenschutzfilter ein und erfordern neben einem hohen Platzbedarf auch einen höheren Materialeinsatz.

Der Erfindung liegt die Aufgabe zugrunde, einen Flammenschutzfilter vorzuschlagen, der bei einer geringen Baulänge ein hohes Maß an Sicherheit gegen Zünddurchschläge bietet.

Die Aufgabe wird durch einen Flammenschutzfilter, bestehend aus einer Anzahl k, mit k = 1 ,...,n, von Schichtenfolgen, gelöst, wobei jede der Schichtenfolgen aus aufeinander angeordneten Filterschichten besteht. Ein erfindungsgemäßer Flammenschutzfilter ist dadurch gekennzeichnet, dass jede Schichtenfolge aus einer ersten Filterschicht und aus einer dazu parallelen zweiten Filterschicht gebildet ist. Jede der Filterschichten besteht jeweils aus einem Material, das in Form eines Gitters angeordnet ist.

Dabei weist das erste Gitter der ersten Filterschicht Öffnungen jeweils einer ersten Öffnungsweite und das zweite Gitter der zweiten Filterschicht Öffnungen jeweils einer zweiten Öffnungsweite auf. Die jeweils zweite Öffnungsweite ist kleiner als die jeweils erste Öffnungsweite. Die zweite Filterschicht ist blickdicht, d. h. dass eine gedachte senkrechte Projektion der zweiten Filterschicht auf eine dazu parallel verlaufende Projektionsebene eine geschlossene Fläche ergibt. Im Gegensatz dazu ergibt eine gedachte senkrechte Projektion der ersten Filterschicht auf die dazu parallel verlaufende Projektionsebene eine Gitterstruktur.

Kern der Erfindung ist der Aufbau eines Flammenschutzfilters aus einer Anzahl von Schichtenfolgen, wobei der kleinste Flammenschutzfilter nur aus einer ersten und zweiten Filterschicht besteht. Durch diesen Aufbau des erfindungsgemäßen Flammenschutzfilters aus Schichtenfolgen als einzelne Einheiten sind vorteilhaft eine modulare Gestaltung und Anpassung von Flammenschutzfiltern an jeweilige Einsatzbedingungen und technische Anforderungen ermöglicht. Außerdem sind zusätzliche Ausgestaltungen, wie das Anordnen weiterer Filterschichten auf oder an einem erfindungsgemäßen Flammenschutzfilter, möglich.

Diejenigen ersten und zweiten Filterschichten, durch die ein Abschluss eines erfindungsgemäßen Flammenschutzfilters gebildet ist und die daher freie Seitenflächen aufweisen, werden als erste bzw. zweite Endfilterschichten definiert. Die Öffnungen dieser Endfilterschichten werden als Endfilteröffnungen bezeichnet und weisen jeweils eine Endfilteröffnungsweite auf.

Wird eine erste und / oder eine zweite Endfilterschicht eines erfindungsgemäßen Flammenschutzfilters in weiteren Ausführungsmöglichkeiten des erfindungsgemäßen Flammenschutzfilters durch eine zusätzlich aufgebrachte weitere Filterschicht überdeckt, ändert das nichts an der ursprünglichen Festlegung der betreffenden Filterschicht als erste Endfilterschicht beziehungsweise zweite Endfilterschicht.

Die ersten beziehungsweise zweiten Endfilteröffnungsweiten können von ersten beziehungsweise von zweiten Öffnungsweiten des Flammenschutzfilters abweichen.

Unter dem Begriff "Gitter" werden alle Anordnungen des jeweiligen Materials einer Filterschicht verstanden, bei denen Öffnungen bzw. Endfilteröffnungen vorhanden und durch Stege aus dem jeweiligen Material getrennt sind. Gitter können daher regelmäßige Strukturen sein, die zum Beispiel aus parallel zueinander angeordneten Drähten oder Stäben bestehen, wie dies beispielsweise von Drahtgittern bekannt ist. Sie können in weiteren Ausführungen auch durch perforierte Materialien gebildet sein. So können mittels energiereicher Strahlung (z. B. Laser) oder mittels mechanischer Werkzeuge Materialien perforiert sein. In weiteren Ausführungen können die Gitter auch während der Herstellung der Filterschichten erzeugt sein. So können beispielsweise Gitter aus vorgeformtem und anschließend gesintertem Material bestehen und als Filterschichten verwendet sein.

Die Gitter können in weiteren Ausführungen auch unregelmäßig angeordnete Öffnungen bzw. Endfilteröffnungen aufweisen.

Die Form der Öffnungen kann beliebig gewählt werden. Diese kann zwischen den Filterschichten sowie innerhalb einer Filterschicht unterschiedlich sein.

In einer sehr günstigen, weil preiswert herstellbaren Ausführung sind die ersten Filterschichten und die erste Endfilterschicht aus Drahtgewebe gefertigt.

Die zweiten Filterschichten und die zweite Endfilterschicht sind in den Ausführungen des erfindungsgemäßen Flammenschutzfilters durch Drahtgewebe in Form von Tressen, die blickdicht sind, ausgebildet.

Die Öffnungsweiten bzw. die Endfilteröffnungsweiten werden durch die lichten Weiten der Öffnungen bzw. Endfilteröffnungen bestimmt. Bei regelmäßig strukturierten Filterschichten, z. B. bei Drahtgeweben, kann unter Berücksichtigung fertigungsbedingter Toleranzen eine mittlere Öffnungsweite beziehungsweise eine mittlere Endfilteröffnungsweite als Öffnungsweite beziehungsweise Endfilteröffnungsweite leicht gemessen und angegeben werden. Es ist ferner möglich, die Öffnungsweiten beziehungsweise die Endfilteröffnungsweiten durch Testverfahren zu bestimmen, bei denen Testkörper einer bekannten Größenverteilung durch die Filterschicht gesiebt werden. Die Abmaße der größten Testkörper, die durch die jeweilige Filterschicht durchgesiebt werden konnten, stellen die Öffnungsweite beziehungsweise die Endfilteröffnungsweite dar. Weiterhin kann der als Gasblasentest oder als Kapillardruckmethode (Bubble-Point-Test) bezeichnete Test verwendet werden (DIN ISO 4003/1977).

Es ist vorteilhaft, wenn die Verteilung der Werte der Öffnungsweite beziehungsweise die der Endfilteröffnungsweite möglichst gering ist, um die strömungstechnischen Eigenschaften der betreffenden Filterschichten und deren Vermögen zur Löschung von Flammen sicher abschätzen zu können und um gleichartige Wirkungen von Schichtenfolgen zu gewährleisten, die mit gleichem Aufbau hergestellt wurden.

Die Anzahl der Öffnungen bzw. Endfilteröffnungen je Flächeneinheit ist durch die Öffnungsweite bzw. die Endfilteröffnungsweite sowie durch die Breite der Stege zwischen den Öffnungen beziehungsweise Endfilteröffnungen bestimmt.

Eine zweite Filterschicht ist im Sinne dieser Beschreibung blickdicht, wenn die Stege der Filterschicht so nah voneinander beabstandet sind und / oder die Stege in verschiedenen Ebenen der Filterschicht so gegeneinander versetzt angeordnet sind, dass ein Gasstrom, der im Wesentlichen senkrecht auf die Filterschicht auftrifft, in seiner Strömungsrichtung zwingend abgelenkt wird. Die Stege sind daher so nah voneinander beabstandet und / oder in verschiedenen Ebenen der Filterschicht so gegeneinander versetzt angeordnet, dass Lichtstrahlen nicht entlang einer Geraden durch die zweite Filterschicht hindurchtreten können, sondern während ihres Auftreffens auf die zweite Filterschicht gebeugt und / oder reflektiert werden.

In einer ausgestaltenden Ausführung des erfindungsgemäßen Flammenschutzfilters sind eine Anzahl n > 1, wenigstens aber zwei (n = 2) Schichtenfolgen angeordnet. Es sind daher je eine erste und eine zweite Endfilterschicht, sowie n - 1 erste Filterschichten und n - 1 zweite Filterschichten vorhanden. Dabei ist die erste Endfilteröffnungsweite vorzugsweise von der ersten Öffnungsweite verschieden. Die erste Endfilteröffnungsweite kann beispielsweise größer als die erste Öffnungsweite sein.

Es ist außerdem möglich, dass die zweite Endfilterschicht und/ oder die erste Endfilterschicht mit einer weiteren Filterschicht aus einem in Form eines Gitters angeordneten Material belegt ist, wobei das Gitter Öffnungen einer weiteren Öffnungsweite aufweist, die gleich oder größer als die zweite Öffnungsweite und die zweite Endfilteröffnungsweite sein kann. In einer vorteilhaften Ausführung ist die weitere Öffnungsweite gleich der ersten Endfilteröffnungsweite. Ein solcher Flammenschutzfilter ist auf beiden Seiten von Gittern größerer Öffnungsweite bzw. Endfilteröffnungsweite bedeckt und dadurch mechanisch zusätzlich stabilisiert und geschützt.

Als Material der Filterschichten, der weiteren Filterschicht(-en) und der Endfilterschichten sind temperaturbeständige Materialien bevorzugt. Diese widerstehen der thermischen Belastung im Falle einer Explosion und erlauben vorteilhaft eine mehrmalige Verwendung des erfindungsgemäßen Flammenschutzfilters. Das Material ist dabei bevorzugt jeweils aus den Materialien Metalle, Metalllegierungen, Kunststoffe, Keramiken oder Verbundwerkstoffe ausgewählt. Verbundwerkstoffe können Verbünde der vorgenannten Materialien sein.

Erfindungsgemäß ist das Gitter der zweiten Filterschicht ein Gewebe in Form einer Tresse ist.

Gewebe werden in unterschiedlichen Bindungen hergestellt. Die wichtigsten Grundtypen der Bindungen sind die Leinen- oder Leinwandbindung (nachfolgend als Leinenbindung bezeichnet) und die Köperbindung. Bei der Leinenbindung ist ein Schussfaden abwechselnd über und unter einem Kettfaden geführt. Bei der Köperbindung ist der Schussfaden unter einen Kettfaden und nachfolgend über mindestens zwei Kettfäden geführt. Durch einen nächsten Schussfaden ist diese Sequenz in einer gleichbleibenden Richtung um jeweils einen Kettfaden verlagert. Nachfolgend werden Schussfäden auch als Schussdrähte und Kettfäden auch als Kettdrähte bezeichnet.

Unter Tressen versteht man Gewebe, im Zusammenhang mit der Beschreibung insbesondere Drahtgewebe, bei denen in einer Schussrichtung Schussdrähte und in einer Kettrichtung Kettdrähte miteinander verwoben sind. Tressen sind Gewebe, bei denen die Kettdrähte in der Regel dicker als die Schussdrähte sind. Außerdem sind die Schussdrähte in der Regel so dicht aneinander gelagert, dass eine sogenannte Nullmasche gebildet ist. Im Sinne der Erfindung gelten auch Gewebe als Tressen, deren Schussdrähte beziehungsweise Kettdrähte höchstens 200 µm, besser höchstens 150 µm und vorzugsweise höchstens 100 µm, voneinander beabstandet sind. Die Schussrichtung und die Kettrichtung verlaufen üblicherweise orthogonal zueinander. Anhand der Webarten sowie der Dicken und Anzahlen der Schussdrähte und der Kettdrähte werden eine Reihe verschiedener Tressen unterschieden. Häufige Arten von Tressen sind die glatte Tresse, die Panzertresse sowie Formen für besondere Verwendung, wie beispielsweise für die Filtration von Fluiden.

Filterschichten eines erfindungsgemäßen Flammenschutzfilters können aus mehreren Lagen des Materials bestehen. So gelten die vorstehend genannten Tressen jeweils als eine zweite Filterschicht, obwohl deren Material in mehreren Ebenen verwoben sein kann.

Erfindungsgemäße Flammenschutzfilter weisen vorzugsweise eine oder mehrere zweite Filterschichten auf, die als Tresse mit Leinenbindung oder als eine Tresse mit Köperbindung ausgebildet sind. Sind mehrere zweite Filterschichten in einem Flammenschutzfilter angeordnet, so können die Tressen einiger der zweiten Filterschichten Tressen mit Leinenbindung und die Tressen anderer zweiter Filterschichten Tressen mit Köperbindung sein.

Weist der erfindungsgemäße Flammenschutzfilter eine Anzahl n der vorhandenen Schichtenfolgen von n größer 1 auf, können vorteilhaft immer zwei zu ein und der selben ersten Filterschicht benachbart angeordnete zweite Filterschichten gegeneinander versetzt angeordnet werden. Durch eine solche versetzte Anordnung ist die Gefahr eines Zünddurchschlags weiter reduziert, da für einen Flammendurchschlag kein geradlinig durchgängiger Weg durch die Schichtenfolgen vorhanden ist und eine Richtungsänderung anströmender Explosionsgase erzwungen wird.

Ein solcher vorteilhafter Versatz zweiter Filterschichten kann erfolgen, indem die zweiten Filterschichten um einen Winkel, ausgewählt aus einem Winkelbereich größer 0° bis einschließlich 90°, zueinander gedreht angeordnet sind und / oder die zweiten Filterschichten in einer parallel zu den Seitenflächen der Filterschichten weisenden Richtung um eine Strecke zueinander verschoben angeordnet werden.

Die zweiten Filterschichten können alternierend um einen Winkel, beispielsweise um 90°, gedreht sein. Es ist auch möglich, dass die zweiten Filterschichten jeweils um einen geringeren Winkelwert, beispielsweise um 15°, 30°, 45°, 60° oder 75°, gedreht sind.

Erfindungsgemäße Flammenschutzfilter wurden beispielsweise aus zwei Schichtenfolgen und einer weiteren Filterschicht hergestellt und in der Klasse II C (EN 60079-0: 2011) erfolgreich auf die Verhinderung eines Zünddurchschlags geprüft. Dabei wurden als weitere Öffnungsweite 2 mm und als erste Öffnungsweite 400 µm gewählt. Es wurden verschiedene solche Flammenschutzfilter erfolgreich geprüft, wobei als kleinste zweite Öffnungsweite 150 µm und als größte zweite Öffnungsweite 315 µm eingesetzt wurden.

Die Wahl der Maße der ersten, zweiten und weiteren Öffnungsweiten hin zu kleineren Werten ist nur durch praktische Erwägungen und Anforderungen, beispielsweise zur Beibehaltung einer ausreichenden Druckentlastung, begrenzt.

Sind mehr als zwei Schichtenfolgen in einem erfindungsgemäßen Flammenschutzfilter vorhanden, sind auch größere erste, zweite und weitere Öffnungsweiten zünddurchschlagssicher. Für die Klassen II A und II B nach oben genannter Norm sind größere erste, zweite und weitere Öffnungsweiten möglich.

Mehrere erfindungsgemäße Flammenschutzfilter können auch zusammen angeordnet und verwendet sein. In einer möglichen Anordnung von wenigstens zwei Flammenschutzfiltern sind die Flammenschutzfilter entlang einer gemeinsamen, senkrecht auf den Filterschichten der Flammenschutzfilter stehenden Achse angeordnet.

Es ist günstig, wenn die Flammenschutzfilter in der Anordnung mit einem Abstand von weniger als 1 mm, vorteilhaft 0,5 mm, 0,25 mm oder 0,1 mm, angeordnet sind. Ein geringer Abstand zwischen benachbart angeordneten Flammenschutzfiltern reduziert die Gefahr des Auftretens von Bränden auf bzw. zwischen den Flammenschutzfiltern.

Dabei ist es möglich, dass wenigstens zwei benachbart angeordnete Flammenschutzfilter miteinander in direktem Kontakt stehen. Die in direktem Kontakt stehenden Flammenschutzfilter berühren sich beispielsweise an ihren ersten Endfilterschichten, an ihren zweiten Endfilterschichten oder an einer ersten Endfilterschicht und einer zweiten Endfilterschicht. Ist auf einer zweiten Endfilterschicht eine weitere Filterschicht vorhanden, kann der direkte Kontakt auch durch die weitere Endfilterschicht mit einer ersten Endfilterschicht, mit einer zweiten Endfilterschicht oder mit einer anderen weiteren Filterschicht gebildet sein.

Vorzugsweise stehen Flammenschutzfilter in einer Anordnung über erste Filterschichten bzw. über weitere Filterschichten in direktem Kontakt miteinander, die eine große erste Endfilteröffnungsweite bzw. weitere Öffnungsweite von beispielsweise 1,0 mm und größer, wie zum Beispiel 1,5 mm, 2 mm oder 2,5 mm, aufweisen.

Stehen benachbart angeordnete Flammenschutzfilter in direktem Kontakt, hat es sich überraschenderweise als vorteilhaft erwiesen, wenn sich zwei einander zugewandte Filterschichten zwar berühren, sich diese Berührung jedoch auf minimale Kontaktflächen beschränkt, die durch Erhebungen der Gitter gebildet sind. Durch eine solche Gestaltung kann eine, nun reduzierte, Wärmeleitung durch die minimal gehaltenen Kontaktflächen ermöglicht werden. Einem durchströmenden Explosionsgas wird zugleich ein vergleichsweise großes zu durchströmendes Volumen geboten. Es wird vorteilhaft eine starke Abkühlung des Explosionsgases erreicht, wenn dieses den Weg durch die beiden sich berührenden Filterschichten durchströmt. Diese Ausführung einer Anordnung mit erfindungsgemäßen Flammenschutzfiltern verhindert sehr zuverlässig ein Rückzünden. Infolge der effektiven Abkühlung des Explosionsgases können bei Explosionen im Gehäuse auf der nach außen weisenden Endfilterschicht die für die Temperaturklasse T6 zugelassenen 80 °C (EN 60079-0: 2011) unterschritten werden.

Ein besonderer Vorteil erfindungsgemäßer Flammenschutzfilter liegt darin, dass ein Zünddurchschlag bei gleichzeitig effizienter Druckentlastung erreicht wird. Außerdem ist der Einsatz vergleichsweise preiswerter Materialien wie Draht in Filterschichten in ebenfalls preiswert herstellbaren Ausführungen von Gittern ermöglicht.

Die erfindungsgemäßen Flammenschutzfilter sowie deren Anordnungen bieten den großen Vorteil, dass diese geringe Druckverlustbeiwerte aufweisen. Gleichzeitig sind die von einer Flammenfront zurückzulegenden Wege durch den Flammenschutzfilter lang, sodass eine gute Abkühlung und hohe Sicherheit gegen Zünddurchschlag erreicht ist. Außerdem erfährt der Flammenschutzfilter durch die größeren verwendbaren Materialstärken eine hohe Stabilität gegen Verformungen während des regulären Betriebs der Anlagen sowie im Falle eines Explosionsereignisses oder wiederholter Explosionsereignisse.

Die Verwendung temperaturbeständiger Materialien sowie die Möglichkeit, diese Materialien mit großen Dimensionen, beispielsweise mit großen Drahtdurchmessern, zu verwenden, erlaubt bei der Qualitätskontrolle eine Typprüfung statt einer aufwendigen Stückprüfung. Die Prüfung kann sich dabei auf das Gehäuse oder auf die Flammenschutzfilter beziehen.

Dabei muss das Gehäuse dem 4-fachen Bezugsdruck widerstehen. Andernfalls ist eine Stückprüfung mit 1,5-fachem Bezugsdruck erforderlich. Kann nun durch die Druckentlastung der Bezugsdruck ausreichend reduziert werden, entfällt die ansonsten eventuell erforderliche Stückprüfung. Drahtgewebe sind geometrisch definiert. Die Maßhaltigkeit ist hoch. Dadurch ergibt sich ein wesentlich geringerer Prüfaufwand.

Die erfindungsgemäßen Flammenschutzfilter sowie die Anordnungen erfindungsgemäßer Flammenschutzfilter können für eine Reihe technischer Verwendungen vorgesehen werden. So kann ein Flammenschutzfilter oder eine Anordnung zur Verhinderung eines Zünddurchschlags und zur Druckentlastung nach einer Gasdruckerhöhung verwendet werden.

Eine solche Gasdruckerhöhung entsteht beispielsweise infolge einer Explosion. Bei einer Explosion trifft eine Druckwelle auf den Flammenschutzfilter bzw. auf die Anordnung, wo es zu einer lokalen Druckerhöhung kommt. Findet die Explosion im Inneren eines Gehäuses statt, steigt der Gasdruck in dem gesamten Inneren an. Infolge des erfindungsgemäßen Aufbaus des Flammenschutzfilters wird bei einer Explosion eine Front einer auftretenden Druckwelle von einer auftretenden Flammenfront getrennt. Dabei wird die auftretende Druckwelle nach außerhalb des Gehäuses entlastet, während die nachfolgende Flammenfront nicht durch den Flammenschutzfilter durchtritt.

Um maximal zulässige Temperaturen der äußeren Oberflächen des erfindungsgemäßen Flammenschutzfilters sicherzustellen, ist eine entsprechende konstruktive Auslegung des Flammenschutzfilters erforderlich. Dabei kann die Einhaltung der maximal zulässigen Temperatur durch die Wahl der Dicke des Flammenschutzfilters, insbesondere durch die Wahl der Anzahl n von Schichtenfolgen, erreicht werden. Ist in einem Gehäuse nur eine kleine Entlastungsfläche realisierbar, kann eine Anordnung von Flammenschutzfiltern eingesetzt werden.

Die erfindungsgemäße Kombination verschiedener erster und zweiter Filterschichten ermöglicht die Erzielung einer kombinierten Entlastungs-, Filter- und Stützstruktur zur Verhinderung eines Zünddurchschlags bei gleichzeitiger hoher mechanischer Stabilität des Flammenschutzfilters und einer maximalen Druckentlastung.

Für konkrete Anwendungsfälle können erfindungsgemäße Flammenschutzfilter aus Schichtenfolgen spezifisch zusammengestellt werden, wobei die ersten und zweiten Filterschichten der Schichtenfolgen hinsichtlich des jeweils eingesetzten Materials sowie der Öffnungsweiten individuell ausgewählt werden können. Weiterhin kann durch die Positionierung und gegebenenfalls durch eine versetzte Anordnung, insbesondere der zweiten Filterschichten zueinander, die Charakteristik des Flammenschutzfilters hinsichtlich der Verhinderung eines Zünddurchschlags sowie einer möglichen Druckentlastung beeinflusst werden.

Durch Wirkung der Filterschichten in der Schichtenfolge oder in den Schichtenfolgen eines erfindungsgemäßen Flammenschutzfilters ist gezielt eine mehrfache Ab- und Umlenkung einer Flammenfront bewirkt, wodurch die Flammen gelöscht und die Explosionsgase abgekühlt werden. Zugleich ist ein hoher Gasstrom durch den Flammenschutzfilter ermöglicht, sodass eine effektive Druckentlastung stattfindet.

Der erfindungsgemäße Flammenschutzfilter kann in kleinen Baulängen hergestellt und verwendet werden. So ist es beispielsweise möglich, einen Flammenschutzfilter, bestehend aus zwei Schichtenfolgen und einer weiteren Filterschicht, mit einer Baulänge (Dicke) von weniger als 4 mm zu erstellen. Bei geeigneter Wahl der Materialien und Öffnungsweiten bzw. Endfilteröffnungsweiten ist durch eine Anordnung zweier solcher Flammenschutzfilter bei einer Baulänge der Anordnung von kleiner als 8 mm eine Druckentlastung mit einer zuverlässigen Sicherung gegen Zünddurchschlag verbunden.

Der erfindungsgemäße Flammenschutzfilter kann beliebige Querschnittsflächen aufweisen und beispielsweise rund, oval, dreieckig, viereckig oder vieleckig sein oder eine unregelmäßige Form der Querschnittsfläche aufweisen. Er kann mit einer Fassung versehen sein, um den Flammenschutzfilter in einer Anordnung von Flammenschutzfiltern, in einem Gehäuse oder in einer anderen Halterung zu montieren. Erfindungsgemäße Flammenschutzfilter können auch als integrale Bauteile technischer Vorrichtungen, beispielsweise von explosionsgeschützten und / oder druckentlasteten Gehäusen, vorgesehen sein. Sie können beispielsweise direkt in einer Gehäusewand stoffschlüssig eingefügt sein.

Die Schichtenfolgen können außerdem als Einlegeteile konzipiert sein, die bei der Fertigung eines Gehäuses in dieses eingelegt und beispielsweise umgossen oder umspritzt werden können, was eine hohe Genauigkeit bei der Fertigung des Gehäuses und eine sichere Abdichtung des Flammenschutzfilters entlang seiner Umfangsfläche erlaubt.

Die erste(-n), zweite(-n) und / oder weitere(-n) Filterschicht(-en) eines erfindungsgemäßen Flammenschutzfilters und / oder der Anzahl von Schichtenfolgen können miteinander stoffschlüssig verbunden, beispielsweise miteinander verschweißt oder versintert sein. Weiterhin können die erste(-n), zweite(-n) und / oder weitere(-n) Filterschicht(-en) miteinander formschlüssig verbunden sein, indem diese beispielsweise durch Schraub- oder Klemmverbindungen gehalten oder in entsprechend geformten Halterungen angeordnet sind.

Erfindungsgemäßen Flammenschutzfiltern sowie Anordnungen von Flammenschutzfiltern kann zusätzlich mindestens eine Einrichtung zum Schutz gegen ein Eindringen von gasförmigen und / oder festen Stoffen und Stoffgemischen zugeordnet sein. So können Membranen, Ventile, Lamellen oder Klappen als Schutzeinrichtungen vorhanden sein, durch die beispielsweise ein Eindringen der Stoffe und Stoffgemische durch einen Flammenschutzfilter in das Innere eines Gehäuses oder einer Anlage verhindert wird. Solche eindringenden Stoffe und Stoffgemische können zu Verschmutzungen, Vereisungen und zu sonstigen Funktionsstörungen führen. Im Falle einer Explosion wird die mindestens eine Schutzeinrichtung vorzugsweise durch die Druckwelle der Explosion betätigt und für das Explosionsgas durchlässig.

Schutzeinrichtungen können durch Beschichtungen des Materials einer oder aller Filterschichten, durch die geometrische Ausgestaltung einer dem Flammenschutzfilter nachgeordneten Auslassöffnung oder eines Auslasskanals sowie durch aktiv zu betätigende oder passiv arbeitende Einrichtungen gebildet sein.

Die mechanische Stabilität der erfindungsgemäßen Flammenschutzfilter ermöglicht eine direkte Befestigung / Integration dieser Schutzeinrichtungen an dem Flammenschutzfilter.

Der erfindungsgemäße Flammenschutzfilter kann in einer weiteren Ausführung ringförmig ausgeführt sein, um so die Bildung eines Temperaturheißpunktes beim Durchströmen in der Mitte des Flammenschutzfilters zu verhindern.

Typische Verwendungsgebiete erfindungsgemäßer Flammenschutzfilter und Anordnungen von Flammenschutzfiltern sind Geräte wie zum Beispiel Schaltschränke, in denen hohe Temperaturen auftreten können und in denen zudem Zündquellen, wie elektrische Schalter, vorhanden sind.

Der erfindungsgemäße Flammenschutzfilter als auch eine Anordnung können als ein Filter zur Filtration von Medien verwendet sein. Medien können dabei Gase, Gasgemische, Aerosole, Stäube, Nebel, Dämpfe, Dispersionen, Suspensionen, Schüttgüter, Gemische von Schüttgütern oder Flüssigkeiten sein.

Eine weitere Verwendung eines erfindungsgemäßen Flammenschutzfilters oder einer Anordnung besteht in der Durchleitung von Gasen oder Gasgemischen durch die Flammenschutzfilter oder durch die Anordnung. So kann eine Verwendung zur Filtration von Luft oder Luftgemischen, beispielsweise in Klimaanlagen, erfolgen.

Weitere Verwendungsmöglichkeiten liegen auf dem Gebiet der Konstruktion von Hupen und akustischen Signalvorrichtungen. Schallquellen als potenzielle Zündquellen können mittels der erfindungsgemäßen Flammenschutzfilter von einer Umgebung abgeschirmt werden, wobei der ausgesendete Schall als Druckwelle effektiv durch den Flammenschutzfilter hindurchtreten kann.

Wenigstens ein Flammenschutzfilter kann vorteilhaft in einem druckfest gekapselten Gehäuse verwendet sein.

Die Erfindung wird nachfolgend anhand von Ausführungsbeispielen und Abbildungen näher erläutert. Dabei zeigen:
- Fig. 1: eine schematische Darstellung eines ersten Ausführungsbeispiels eines erfindungsgemäßen Flammenschutzfilters in einer Explosionsdarstellung,
- Fig. 2: eine schematische Darstellung eines zweiten Ausführungsbeispiels eines erfindungsgemäßen Flammenschutzfilters in einer Explosionsdarstellung,
- Fig. 3: eine schematische Darstellung eines dritten Ausführungsbeispiels eines erfindungsgemäßen Flammenschutzfilters in einer schematischen Seitenansicht,
- Fig. 4: eine schematische Darstellung eines vierten Ausführungsbeispiels eines erfindungsgemäßen Flammenschutzfilters in einer Explosionsdarstellung, wobei nur die zweiten Filterschichten und die zweite Endfilterschicht gezeigt sind,
- Fig. 5: ein erstes Ausführungsbeispiel einer Anordnung eines ersten Flammenschutzfilters und eines zweiten Flammenschutzfilters,
- Fig. 6: ein zweites Ausführungsbeispiel einer Anordnung zweier erfindungsgemäßer Flammenschutzfilter in einer schematisierten Darstellung in der Seitenansicht,
- Fig. 7: eine schematische Darstellung eines fünften Ausführungsbeispiels eines erfindungsgemäßen Flammenschutzfilters mit einem Versatz der zweiten Filterschicht und der zweiten Endfilterschicht und
- Fig. 8: ein Ausführungsbeispiel eines druckentlasteten Gehäuses.

Die nachfolgenden Ausführungsbeispiele sind schematische Darstellungen und nicht maßstabsgerecht. Gleiche Bezugszeichen bezeichnen in den verschiedenen Abbildungen gleiche technische Elemente, falls dies nicht abweichend beschrieben ist.

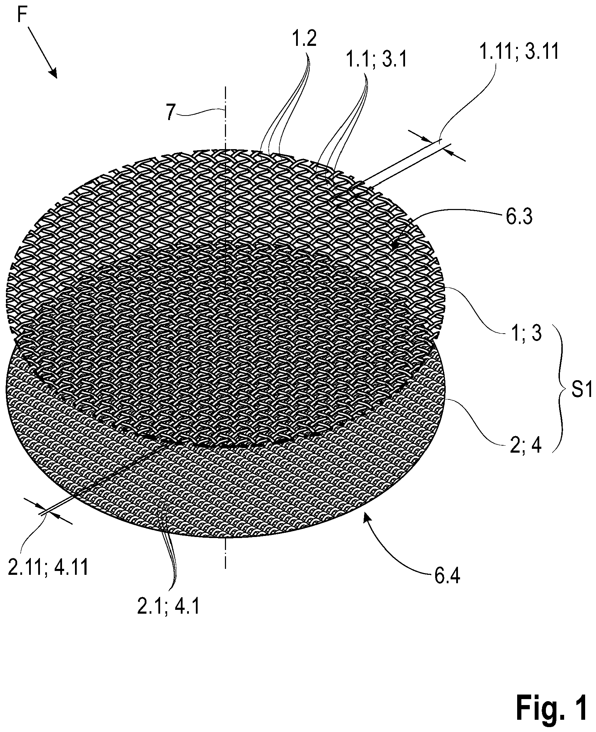

Ein wesentliches Element eines in Fig. 1 schematisch dargestellten ersten Ausführungsbeispiels eines erfindungsgemäßen Flammenschutzfilters F ist eine erste Schichtenfolge S1, bestehend aus einer ersten Filterschicht 1 und einer zweiten Filterschicht 2, die übereinander entlang einer gemeinsamen Achse 7 angeordnet sind.

Die erste Filterschicht 1 ist aus einem Drahtgewebe gebildet, besitzt eine runde Querschnittsfläche und weist erste Öffnungen 1.1 auf. Die ersten Öffnungen 1.1 sind durch Stege 1.2 begrenzt, gleich groß und gleichartig geformt und weisen eine erste Öffnungsweite 1.11 von 400 µm als lichte Weite zwischen zwei zueinander parallel verlaufenden Stegen 1.2 auf.

Die zweite Filterschicht 2 ist ebenfalls aus einem Drahtgewebe gebildet. Dieses Drahtgewebe ist eine Tresse in Leinenbindung und weist zweite Öffnungen 2.1 mit einer zweiten Öffnungsweite 2.11 von 150 µm auf.

Die erste Filterschicht 1 besitzt eine freie Seitenfläche 6.3 und wird fortan als erste Endfilterschicht 3 bezeichnet. Die zweite Filterschicht 2 weist eine freie Seitenfläche 6.4 auf und wird fortan als zweite Endfilterschicht 4 bezeichnet.

Entsprechend werden die Öffnungen und Öffnungsweiten der ersten Endfilterschicht 3 fortan als erste Endfilteröffnungen 3.1 beziehungsweise als erste Endfilteröffnungsweiten 3.11 bezeichnet.

Dementsprechend werden die Öffnungen und Öffnungsweiten der zweiten Endfilterschicht 4 fortan als zweite Endfilteröffnungen 4.1 beziehungsweise als zweite Endfilteröffnungsweiten 4.11 bezeichnet.

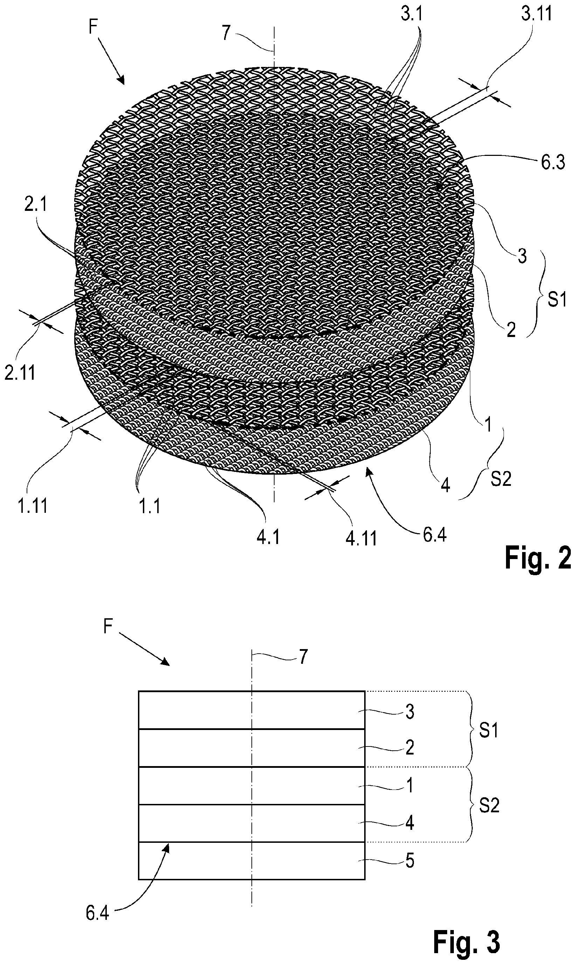

Erfindungsgemäße Flammenschutzfilter F können aus einer Anzahl n = 2 von Schichtenfolgen S1 und S2 zusammengesetzt sein, wie dies in Fig. 2 schematisch dargestellt ist.

In dem in Fig. 2 gezeigten zweiten Ausführungsbeispiel ist ein Flammenschutzfilter F schematisch dargestellt, in dem eine erste Schichtenfolge S1 und eine zweite Schichtenfolge S2 übereinander angeordnet sind. Der Aufbau der ersten und zweiten Schichtenfolgen S1, S2 entspricht dem zu Fig. 1 beschriebenen grundsätzlichen Aufbau.

Die erste Schichtenfolge S1 ist durch die erste Endfilterschicht 3, welche eine freie Seitenfläche 6.3, erste Endfilteröffnungen 3.1 mit einer ersten Endfilteröffnungsweite 3.11 aufweist (siehe Fig. 1), und durch die zweite Filterschicht 2 gebildet, welche zweite Öffnungen 2.1 mit einer zweiten Öffnungsweite 2.11 aufweist (siehe Fig. 1).

Die zweite Schichtenfolge S2 ist durch die erste Filterschicht 1 der zweiten Schichtenfolge S2, welche erste Öffnungen 1.1 mit einer ersten Öffnungsweite 1.11 aufweist (siehe auch Fig. 1), und die zweite Endfilterschicht 4 gebildet, welche eine freie Seitenfläche 6.4 und zweite Endfilteröffnungen 4.1 mit einer zweiten Endfilteröffnungsweite 4.11 aufweist (siehe auch Fig. 1).

Das Material der Filterschichten 1 und 2 sowie der Endfilterschichten 3 und 4 ist rostfreier Stahldraht.

In weiteren Ausführungen des erfindungsgemäßen Flammenschutzfilters F kann das Material der Filterschichten 1 und 2 sowie der Endfilterschichten 3 und 4 unabhängig voneinander die Materialien Metalle, Metalllegierungen, Kunststoffe, Keramiken oder Verbundwerkstoffe sein. Es können in weiteren Ausführungen andere erste und zweite Öffnungsweiten 1.11, 2.11, z.B. Nullmaschen, sowie andere erste und zweite Endfilteröffnungsweiten 3.11, 4.11 vorliegen.

Die erste Öffnungsweite 1.11 ist geringer als die erste Endfilteröffnungsweite 3.11.

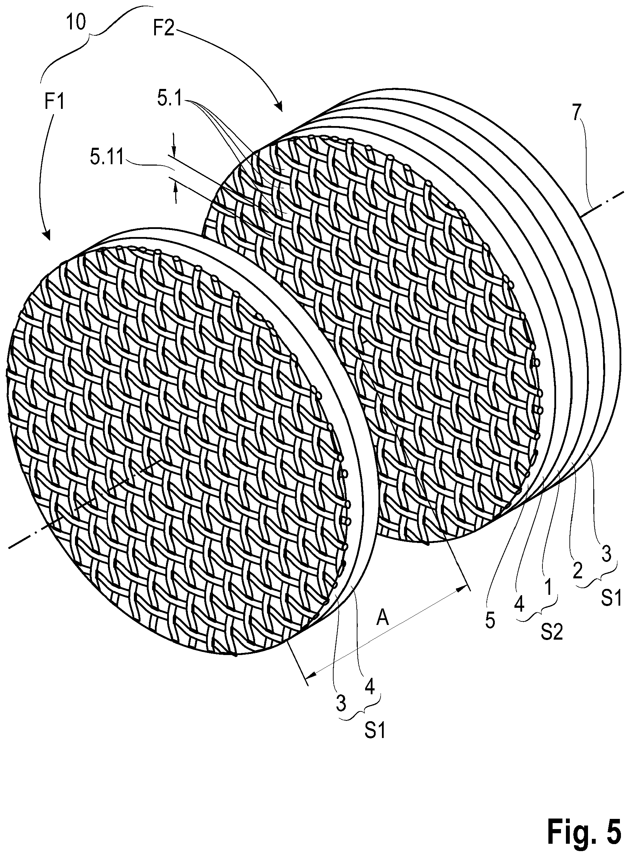

Ein drittes Ausführungsbeispiel eines erfindungsgemäßen Flammenschutzfilters F ist in Fig. 3 der besseren Übersichtlichkeit halber als schematische Seitenansicht dargestellt. Der gezeigte Flammenschutzfilter F besteht aus den übereinander angeordneten ersten und zweiten Schichtenfolgen S1 und S2, wie diese zu Fig. 2 beschrieben wurden. Die freie Seitenfläche 6.4 der zweiten Endfilterschicht 4 ist mit einer weiteren Filterschicht 5 überdeckt, welche weitere Öffnungen 5.1 mit einer weiteren Öffnungsweite 5.11 aufweist (siehe Fig. 5). Die weitere Öffnungsweite 5.11 ist größer als die zweite Endfilteröffnungsweite 4.11.

Das Material der weiteren Filterschicht 5 ist ein Drahtgewebe aus rostfreiem Stahldraht.

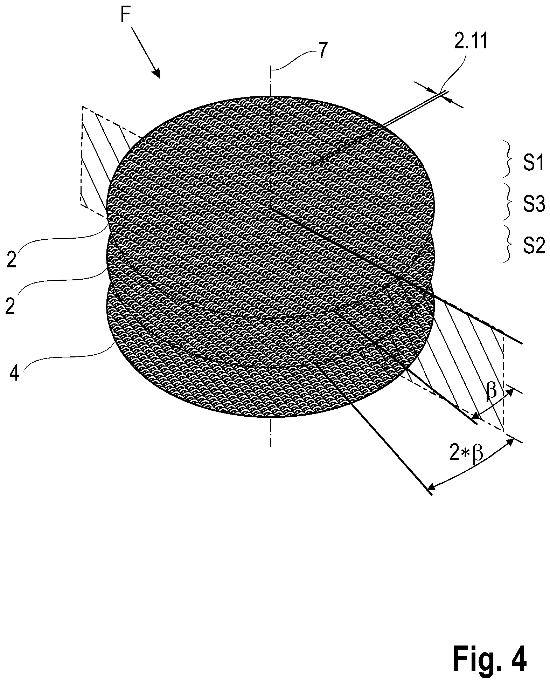

In Fig. 4 ist ein viertes Ausführungsbeispiel eines erfindungsgemäßen Flammenschutzfilters F schematisch dargestellt, wobei gegenüber dem Ausführungsbeispiel gemäß Fig. 2 eine dritte Schichtenfolge S3 zwischen die Schichtenfolgen S1 und S2 eingebaut wurde, sodass der Flammenschutzfilter F aus drei Schichtenfolgen S1, S2 und S3 besteht. In Fig. 4 sind der besseren Übersichtlichkeit halber nur die zweiten Filterschichten 2 und die zweite Endfilterschicht 4 des Flammenschutzfilters F gezeigt. Die zweiten Filterschichten 2 und die zweite Endfilterschicht 4 sind wiederum aus Drahtgeweben in Form von Tressen in Leinenbindung ausgebildet, die jeweils gegenüber einer benachbart, gemäß Fig. 4, angeordneten zweiten Filterschicht 2 beziehungsweise gegenüber einer benachbart, gemäß Fig. 4, angeordneten zweiten Endfilterschicht 4 um einen Winkel β von 10° gedreht angeordnet sind. Die Drehung erfolgt in einer gleichbleibenden Richtung, so dass die in der Mitte gezeigte zweite Filterschicht 2 gegenüber der oberen zweiten Filterschicht 2 um den Winkel β und die zuunterst gezeigte zweite Endfilterschicht 4 gegenüber der obersten zweiten Filterschicht 2 um den Winkel 2*β gedreht angeordnet ist.

In weiteren Ausführungen des Flammenschutzfilters F kann der Winkel β anders gewählt sein.

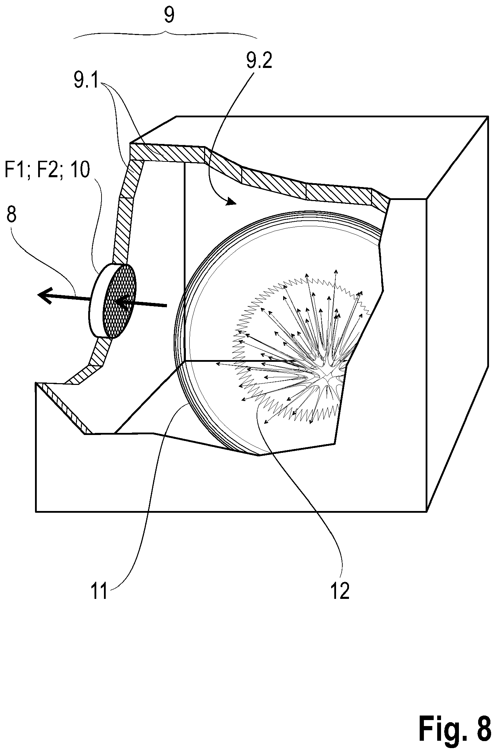

Wird der Flammenschutzfilter F von einem Gas, insbesondere von einem Explosionsgas, durchströmt, ist durch die geringen zweiten Öffnungsweiten 2.11 sowie die Verdrehung der zweiten Filterschichten 2 bzw. der zweiten Endfilterschicht 4 eine zusätzliche Richtungsänderung des strömenden Explosionsgases bewirkt. Zudem ist die von dem Explosionsgas zu durchströmende Strecke verlängert, was die Trennung einer Druckwelle 11 von einer Flammenfront 12 (siehe Fig. 8) unterstützt.

Ein erstes Ausführungsbeispiel einer Anordnung 10 eines ersten Flammenschutzfilters F1 und eines zweiten Flammenschutzfilters F2 entlang einer gemeinsamen Achse 7 ist in Fig. 5 gezeigt. Die gemeinsame Achse 7 steht senkrecht auf den Filterschichten des ersten und des zweiten Flammenschutzfilters F1 und F2 und verläuft durch deren Flächenmittelpunkte. Der erste Flammenschutzfilter F1 entspricht der Ausführung gemäß Fig. 1 und besteht aus einer ersten Schichtenfolge S1 mit einer ersten Endfilterschicht 3 und einer zweiten Endfilterschicht 4. Der zweite Flammenschutzfilter F2 entspricht der Ausführung gemäß Fig. 3 und besteht aus einer ersten Schichtenfolge S1 und einer zweiten Schichtenfolge S2. Die erste Schichtenfolge S1 des zweiten Flammenschutzfilters F2 ist durch die erste Endfilterschicht 3 und die zweite Filterschicht 2 gebildet. Die zweite Schichtenfolge S2 des zweiten Flammenschutzfilters F2 ist durch die erste Filterschicht 1 und die zweite Endfilterschicht 4 gebildet. Auf der freien Seitenfläche 6.4 der zweiten Endfilterschicht 4 ist eine weitere Filterschicht 5 aufgebracht, die weitere Öffnungen 5.1 mit einer weiteren Öffnungsweite 5.11 aufweist (siehe auch Fig. 3). Der erste Flammenschutzfilter F1 und der zweite Flammenschutzfilter F2 sind mit einem Abstand A zwischen der zweiten Endfilterschicht 4 des ersten Flammenschutzfilters F1 und der weiteren Filterschicht 5 des zweiten Flammenschutzfilters F2 angeordnet.

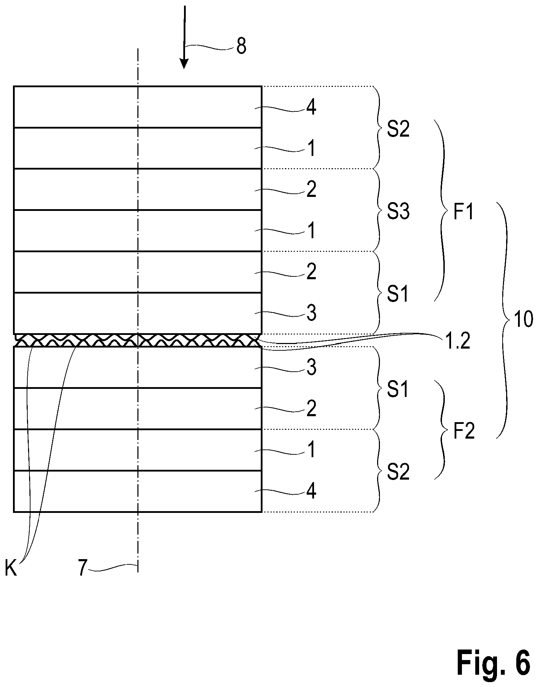

Fig. 6 zeigt ein zweites Ausführungsbeispiel einer Anordnung 10 zweier erfindungsgemäßer Flammenschutzfilter F1, F2 in einer schematisierten Darstellung in der Seitenansicht. Der erste Flammenschutzfilter F1 entspricht der Ausführung gemäß Fig. 4 und besteht aus drei Schichtenfolgen S1, S3 und S2. Über einer ersten Endfilterschicht 3 und einer zweiten Filterschicht 2 der ersten Schichtenfolge S1 sind eine erste Filterschicht 1 und eine zweite Filterschicht 2 der dritten Schichtenfolge S3 und darüber eine erste Filterschicht 1 und eine zweite Endfilterschicht 4 der zweiten Schichtenfolge S2 vorhanden. Die drei Schichtenfolgen S1, S3 und S2 sind miteinander durch einen Sinterprozess fest verbunden.

Der zweite Flammenschutzfilter F2 entspricht der Ausführung gemäß Fig. 2 und ist durch zwei Schichtenfolgen S1 und S2 gebildet. Die erste Schichtenfolge S1 des zweiten Flammenschutzfilters F2 besteht aus einer ersten Endfilterschicht 3 und einer zweiten Filterschicht 2. Die zweite Schichtenfolge S2 des zweiten Flammenschutzfilters F2 besteht aus einer ersten Filterschicht 1 und einer zweiten Endfilterschicht 4. Der erste Flammenschutzfilter F1 und der zweite Flammenschutzfilter F2 sind entlang der gemeinsamen Achse 7 angeordnet und stehen über ihre ersten Endfilterschichten 3 in direktem Kontakt miteinander. Die beiden ersten Endfilterschichten 3 bestehen aus einem Drahtgewebe, durch dessen Stege 1.2, bedingt durch das für seine Herstellung eingesetzte Webverfahren, bereichsweise Erhöhungen und Vertiefungen auf der jeweiligen ersten Endfilterschicht 3 gegeben sind. Der Bereich, über den die beiden ersten Endfilterschichten 3 sich berühren, sowie die Erhöhungen und Vertiefungen sind in Fig. 6 nicht maßstabgerecht vergrößert dargestellt. Der erste und der zweite Flammenschutzfilter F1, F2 stehen derart miteinander in direktem Kontakt, dass sich wenigstens einige der Erhöhungen an ihren höchsten Bereichen berühren und dort Kontaktflächen K zwischen dem ersten Flammenschutzfilter F1 und dem zweiten Flammenschutzfilter F2 gebildet sind. Über die Kontaktflächen K ist eine Wärmeleitung zwischen dem ersten Flammenschutzfilter F1 und dem zweiten Flammenschutzfilter F2 ermöglicht. Zugleich ist durch die großen ersten Endfilteröffnungsweiten 3.11 und einen Durchmesser des Materials der ersten Endfilterschichten 3 ein Raum geschaffen, der von einem Explosionsgas in einer Entlastungsrichtung 8 zu durchströmen ist. Das Explosionsgas kühlt dabei stark ab, was eine Löschung gegebenenfalls noch vorhandener Flammen wesentlich unterstützt.

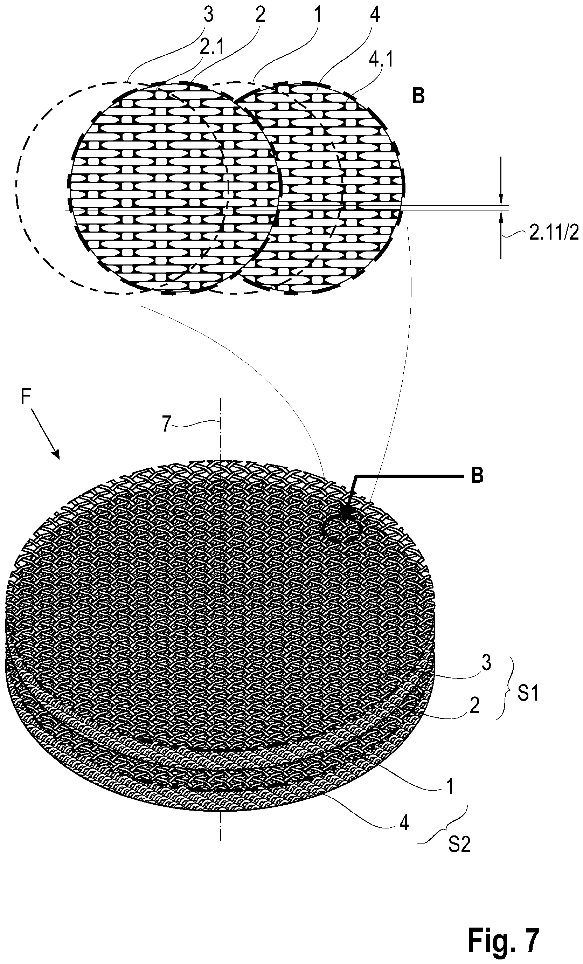

In einem fünften Ausführungsbeispiel eines erfindungsgemäßen Flammenschutzfilters F gemäß Fig. 7 sind eine erste Schichtenfolge S1 mit einer ersten Endfilterschicht 3 und einer zweiten Filterschicht 2 sowie eine zweite Schichtenfolge S2 mit einer ersten Filterschicht 1 und einer zweiten Endfilterschicht 4 übereinander angeordnet. Die zweite Filterschicht 2 und die zweite Endfilterschicht 4 sind gegeneinander um etwa eine halbe zweite Öffnungsweite 2.11 versetzt angeordnet (siehe Teilausschnitt B), so dass die zweiten Öffnungen 2.1 und die zweiten Endfilteröffnungen 4.1 nicht deckungsgleich übereinander stehen. Zur übersichtlicheren Illustration sind in dem Teilausschnitt B die erste Endfilterschicht 3 und die erste Filterschicht 1 lediglich angedeutet gezeigt.

In Fig. 8 ist ein druckentlastetes Gehäuse 9 in einer Teilschnittdarstellung gezeigt, das in einer seiner Gehäusewände 9.1 eine Anordnung 10 enthält, wie diese zu Fig. 6 beschrieben ist. Dabei ist die zweite Endfilterschicht 4 des zweiten Flammenschutzfilters F2 (siehe Fig. 6) einem Gehäuseinneren 9.2 zugewandt, während die zweite Endfilterschicht 4 des ersten Flammenschutzfilters F1 einer Umgebung des Gehäuses 9 zugewandt ist. Die Gehäusewand 9.1 wird von der Anordnung 10 durchspannt.

Im Gehäuseinneren 9.2 ist stark vereinfacht eine gerade stattfindende Explosion gezeigt. Ausgehend von einem Explosionszentrum breitet sich allseitig ein Explosionsgas mit einer Druckwelle 11 und einer Flammenfront 12 aus. In dem Gehäuseinneren 9.2 kommt es infolge der Explosion zu einer Erhöhung der Druckwerte und einem Überdruck. Ein Anteil des Explosionsgases strömt infolge des Überdrucks im Gehäuseinneren 9.2 in der Entlastungsrichtung 8 durch die Anordnung 10 hindurch aus dem Gehäuse 9.

Anhand der Figuren 6 und 8 werden die Vorgänge in der Anordnung 10 vereinfacht beschrieben.

Die Druckwelle 11 und die Flammenfront 12 treffen auf die Anordnung 10, wobei die Größe der Entlastungsfläche, also die dem Explosionsgas frei zugängliche Querschnittsfläche der Anordnung 10, in Zusammenwirken mit den jeweils herrschenden Druckwerten im Gehäuseinneren 9.2 wesentlich das Volumen des Explosionsgases bestimmt, das je Zeiteinheit durch die Anordnung 10 tritt (Volumenstrom). Bereits bei seinem Durchtritt durch die zweite Endfilterschicht 4 des ersten Flammenschutzfilters F1 erfährt das Explosionsgas aufgrund der kleinen zweiten Endfilteröffnungsweite 4.11 bzw. vor allem wegen der blickdichten Ausgestaltung Richtungsänderungen und Turbulenzen und gelangt dann zu der ersten Filterschicht 1. Selbiges wird durch die nachfolgenden Schichtenfolgen S3 und S1 bewirkt. Durch die Turbulenzen und den intensiven Kontakt des Explosionsgases mit den Materialien des ersten Flammenschutzfilters F1 ist eine Abkühlung des Explosionsgases und eine zunehmende Trennung von Druckwelle 11 und Flammenfront 12 erreicht. Nach dem Durchströmen der zweiten Filterschicht 2 des ersten Flammenschutzfilters F1 erfolgt im Bereich der miteinander in direktem Kontakt stehenden ersten Endfilterschichten 3 des ersten und des zweiten Flammenschutzfilters F1, F2 eine weitere starke Abkühlung des Explosionsgases. Die vorstehend umrissenen Vorgänge wiederholen sich sinngemäß, während das Explosionsgas weiter in Entlastungsrichtung 8 durch den zweiten Flammenschutzfilter F2 strömt. Durch den nunmehr im Gehäuse 9 entstandenen Unterdruck wird das entwichene Gas zwangsweise wieder in die Anordnung 10 hineingezogen, so dass im ersten Flammenschutzfilter F1 eine derartig hohe Temperatur noch herrschen könnte, dass es innerhalb seiner Schichtenfolgen S2 oder S3 zur Entzündung kommen könnte. Durch die gewählte Anordnung 10, zwei Flammenschutzfilter F1 und F2 hintereinander anzuordnen, ist es gesichert, dass eine Flammenfront 12 nicht durch den zweiten Flammenschutzfilter F2 hindurch das Gehäuse verlassen kann, sobald die Schichtenfolge S1 des ersten Flammschutzfilters F1 eine Temperatur kleiner der Zündtemperatur besitzt.

### Bezugszeichenliste

- F: Flammenschutzfilter
- F1: erster Flammenschutzfilter
- F2: zweiter Flammenschutzfilter
- S1: erste Schichtenfolge
- S2: zweite Schichtenfolge
- S3: dritte Schichtenfolge
- 1: erste Filterschicht
- 1.1: erste Öffnung
- 1.11: erste Öffnungsweite
- 1.2: Steg
- 2: zweite Filterschicht
- 2.1: zweite Öffnung
- 2.11: zweite Öffnungsweite
- 3: erste Endfilterschicht
- 3.1: erste Endfilteröffnung
- 3.11: erste Endfilteröffnungsweite
- 4: zweite Endfilterschicht
- 4.1: zweite Endfilteröffnung
- 4.11: zweite Endfilteröffnungsweite
- 5: weitere Filterschicht
- 5.1: weitere Öffnung
- 5.11: weitere Öffnungsweite
- 6.3: freie Seitenfläche (der ersten Endfilterschicht 3)
- 6.4: freie Seitenfläche (der zweiten Endfilterschicht 4)
- 7: gemeinsame Achse
- 8: Entlastungsrichtung
- 9: Gehäuse
- 9.1: Gehäusewand
- 9.2: Gehäuseinneres
- 10: Anordnung (von Flammenschutzfiltern F1 und F2)
- 11: Druckwelle
- 12: Flammenfront
- A: Abstand
- β: Winkel
- K: Kontaktfläche

## Patentansprüche

1. Flammenschutzfilter (F) bestehend aus einer Anzahl k, mit k = 1,...,n, von Schichtenfolgen (S1, S2, S3), wobei jede der Schichtenfolgen (S1, S2, S3) aus aufeinander angeordneten Filterschichten mit einer gemeinsamen Achse (7), enthaltend eine erste Filterschicht (1), gebildet durch ein erstes Gitter mit einer ersten Öffnungsweite (1.11), und eine dazu parallel angeordnete zweite Filterschicht (2), gebildet durch ein zweites Gitter mit einer zweiten Öffnungsweite (2.11), besteht,
das zweite Gitter der zweiten Filterschicht (2) ein Gewebe in Form einer Tresse ist, wobei die Tresse aus Kettdrähten und Schussdrähten besteht , **dadurch gekennzeichnet, dass** die Kettdrähte oder die Schussdrähte dicht aneinandergelegt angeordnet sind, so dass senkrecht auf die zweite Filterschicht (2) auftreffende Lichtstrahlen nicht geradlinig durch die zweite Filterschicht (2) hindurch treten.

2. Flammenschutzfilter (F) nach Anspruch 1, **dadurch gekennzeichnet, dass** die eine freie Seitenfläche (6.3) aufweisende erste Filterschicht (1) eine erste Endfilterschicht (3) mit einer ersten Endfilteröffnungsweite (3.11) und die eine freie Seitenfläche (6.4) aufweisende zweite Filterschicht (2) eine zweite Endfilterschicht (4) mit einer zweiten Endfilteröffnungsweite (4.11) ist.

3. Flammenschutzfilter (F) nach Anspruch 1 oder 2, **dadurch gekennzeichnet, dass** die erste Endfilterschicht (3) und / oder die zweite Endfilterschicht (4) mit einer weiteren Filterschicht (5), gebildet durch ein weiteres Gitter mit einer weiteren Öffnungsweite (5.11), belegt ist.

4. Flammenschutzfilter (F) nach Anspruch 3, **dadurch gekennzeichnet, dass** die weitere Öffnungsweite (5.11) die größte aller Öffnungsweiten oder gleich der ersten Endfilteröffnungsweite (3.11) oder gleich der ersten Öffnungsweite (1.11) oder gleich der zweiten Endfilteröffnungsweite (4.11) oder gleich der zweiten Öffnungsweite (2.11) ist.

5. Flammenschutzfilter (F) nach einem der Ansprüche 1 bis 4, **dadurch gekennzeichnet, dass** das Material der Gitter jeweils aus den Materialien Metalle, Metalllegierungen, Kunststoffe, Keramiken oder Verbundwerkstoffe ausgewählt ist.

6. Flammenschutzfilter (F) nach einem der Ansprüche 1 bis 5, **dadurch gekennzeichnet, dass** die Schussdrähte der Tresse so dicht aneinander gelagert sind, dass eine sogenannte Nullmasche gebildet ist.

7. Flammenschutzfilter (F) nach Anspruch 1 oder 6, **dadurch gekennzeichnet, dass** die Tresse eine Tresse mit Leinenbindung oder eine Tresse mit Köperbindung ist.

8. Flammenschutzfilter (F) nach einem der Ansprüche 1 bis 7, **dadurch gekennzeichnet, dass** bei einer Anzahl n der vorhandenen Schichtenfolgen (S1, S2, S3) von n größer 1 wenigstens zwei benachbart angeordnete zweite Filterschichten (2) gegeneinander versetzt angeordnet sind.

9. Flammenschutzfilter (F) nach Anspruch 8, **dadurch gekennzeichnet, dass** wenigstens zwei benachbart angeordnete zweite Filterschichten (2) um einen Winkel (β), ausgewählt aus einem Winkelbereich größer 0° bis einschließlich 90°, zueinander gedreht angeordnet sind und / oder die zweiten Filterschichten (2) in einer parallel zu den Seitenflächen der Filterschichten (1, 2) weisenden Richtung um eine Strecke zueinander verschoben angeordnet sind.

10. Anordnung (10) von wenigstens zwei Flammenschutzfiltern (F1, F2) nach einem der Ansprüche 1 bis 9, **dadurch gekennzeichnet, dass** alle Flammenschutzfilter (F1, F2) entlang der gemeinsamen Achse (7) angeordnet sind.

11. Anordnung (10) nach Anspruch 10, **dadurch gekennzeichnet, dass** wenigstens zwei benachbart angeordnete Flammenschutzfilter (F1, F2) miteinander in direktem Kontakt stehen.

12. Verwendung eines Flammenschutzfilters (F) nach einem der Ansprüche 1 bis 9 oder einer Anordnung (10) nach einem der Ansprüche 10 oder 11 zur Verhinderung eines Zünddurchschlags und zur Druckentlastung nach einer Gasdruckerhöhung.

13. Verwendung eines Flammenschutzfilters (F) nach einem der Ansprüche 1 bis 9 oder einer Anordnung (10) nach einem der Ansprüche 10 oder 11 als Filter zur Filtration von Medien.

14. Verwendung eines Flammenschutzfilters (F) nach einem der Ansprüche 1 bis 9 oder einer Anordnung (10) nach einem der Ansprüche 10 oder 11 für akustische Signalvorrichtungen zur Abschirmung der Schallquellen als potentielle Zündquellen von der Umgebung, wobei der ausgesendete Schall als Druckwelle (11) effektiv durch den Flammenschutzfilter (F) hindurchtreten kann.

15. Druckfest gekapseltes Gehäuse (9) mit wenigstens einem Flammenschutzfilter (F) nach einem der Ansprüche 1 bis 9.

## Claims

1. A flame-guard filter (F) consisting of a number k, with k = 1,...,n, of layer sequences (S1, S2, S3), wherein each of the layer sequences (S1, S2, S3) consists of filter layers arranged one on top of the other with a common axis (7), containing a first filter layer (1), formed by a first grid with a first opening width (1.11), and a second filter layer (2) arranged parallel thereto, formed by a second grid with a second opening width (2.11), the second grid of the second filter layer (2) is a fabric in the form of a braid, the braid consisting of warp wires and weft wires, **characterised in that** the warp wires or the weft wires are arranged close together so that light rays incident perpendicularly on the second filter layer (2) do not pass through the second filter layer (2) in a straight line.

2. The flame-guard filter (F) according to claim 1, **characterised in that** the first filter layer (1) having a free side surface (6.3) is a first end filter layer (3) with a first end filter opening width (3.11) and the second filter layer (2) having a free side surface (6.4) is a second end filter layer (4) with a second end filter opening width (4.11).

3. The flame-guard filter (F) according to claim 1 or 2, **characterised in that** the first end filter layer (3) and/or the second end filter layer (4) is covered with a further filter layer (5), formed by a further grid with a further opening width (5.11).

4. The flame-guard filter (F) according to claim 3, **characterised in that** the further opening width (5.11) is the largest of all opening widths or equal to the first end filter opening width (3.11) or equal to the first opening width (1.11) or equal to the second end filter opening width (4.11) or equal to the second opening width (2.11).

5. The flame-guard filter (F) according to any one of claims 1 to 4, **characterised in that** the material of the grids is selected from the materials metals, metal alloys, plastics, ceramics or composite materials, respectively.

6. The flame-guard filter (F) according to any one of claims 1 to 5, **characterised in that** the weft wires of the braid are arranged so closely together that a so-called zero mesh is formed.

7. The flame-guard filter (F) according to claim 1 or 6, **characterised in that** the braid is a linen-bonded braid or a twill-bonded braid.

8. The flame-guard filter (F) according to any one of claims 1 to 7, **characterised in that** with a number n of the layer sequences (S1, S2, S3) present of n greater than 1, at least two adjacently arranged second filter layers (2) are arranged offset from one another.

9. The flame-guard filter (F) according to claim 8, **characterised in that** at least two adjacently arranged second filter layers (2) are arranged rotated relative to one another by an angle (β) selected from an angular range greater than 0° up to and including 90°, and/or the second filter layers (2) are arranged displaced relative to one another by a distance in a direction parallel to the side surfaces of the filter layers (1, 2).

10. An arrangement (10) of at least two flame-guard filters (F1, F2) according to any one of claims 1 to 9, **characterised in that** all flame-guard filters (F1, F2) are arranged along the common axis (7).

11. The arrangement (10) according to claim 10, **characterised in that** at least two adjacently arranged flame-guard filters (F1, F2) are in direct contact with each other.

12. Use of a flame-guard filter (F) according to any one of claims 1 to 9 or of an arrangement (10) according to any one of claims 10 or 11 for preventing flame propagation and for relieving the pressure after a gas pressure increase.

13. Use of a flame-guard filter (F) according to any one of claims 1 to 9 or of an arrangement (10) according to any one of claims 10 or 11 as a filter for filtering media.

14. Use of a flame-guard filter (F) according to any one of claims 1 to 9 or an arrangement (10) according to any one of claims 10 or 11 for acoustic signal devices for shielding the sound sources as potential ignition sources from the environment, wherein the emitted sound can effectively pass through the flame-guard filter (F) as a pressure wave (11).

15. A housing (9) encapsulated in a pressure-resistant manner, comprising at least one flame-guard filter (F) according to any one of claims 1 to 9.

## Revendications

1. Filtre pare-flamme (F) constitué d'un nombre k de séquences de couches (S1, S2, S3), avec k = 1, ..., n, chacune des séquences de couches (S1, S2, S3) étant constituée de couches de filtre disposées les unes sur les autres avec un axe commun (7), contenant une première couche de filtre (1), formée par une première grille avec une première largeur d'ouverture (1.11), et une deuxième couche de filtre (2) disposée parallèlement à la première, formée par une deuxième grille avec une deuxième largeur d'ouverture (2.11), la deuxième grille de la deuxième couche de filtre (2) étant un tissu en forme de tresse, la tresse étant constituée de fils de chaîne et de fils de trame, **caractérisé en ce que** les fils de chaîne ou les fils de trame sont disposés de manière serrée les uns contre les autres, de sorte que les rayons lumineux arrivant perpendiculairement sur la deuxième couche de filtre (2) ne traversent pas la deuxième couche de filtre (2) en ligne droite.

2. Filtre pare-flamme (F) selon la revendication 1, **caractérisé en ce que** la première couche de filtre (1) présentant une surface latérale libre (6.3) est une première couche de filtre d'extrémité (3) avec une première largeur d'ouverture de filtre d'extrémité (3.11) et la deuxième couche de filtre (2) présentant une surface latérale libre (6.4) est une deuxième couche de filtre d'extrémité (4) avec une deuxième largeur d'ouverture de filtre d'extrémité (4.11).

3. Filtre pare-flamme (F) selon la revendication 1 ou 2, **caractérisé en ce que** la première couche de filtre d'extrémité (3) et/ou la deuxième couche de filtre d'extrémité (4) est recouverte d'une autre couche de filtre (5), formée par une autre grille ayant une autre largeur d'ouverture (5.11).

4. Filtre pare-flamme (F) selon la revendication 3, **caractérisé en ce que** l'autre largeur d'ouverture (5.11) est la plus grande de toutes les largeurs d'ouverture ou est égale à la première largeur d'ouverture de filtre d'extrémité (3.11) ou est égale à la première largeur d'ouverture (1.11) ou est égale à la deuxième largeur d'ouverture de filtre d'extrémité (4.11) ou est égale à la deuxième largeur d'ouverture (2.11).

5. Filtre pare-flamme (F) selon l'une quelconque des revendications 1 à 4, **caractérisé en ce que** le matériau des grilles est choisi respectivement parmi les métaux, les alliages de métaux, les matières plastiques, les céramiques ou les matériaux composites.

6. Filtre pare-flamme (F) selon l'une quelconque des revendications 1 à 5, **caractérisé en ce que** les fils de trame de la tresse sont serrés les uns contre les autres de manière à former ce que l'on appelle une maille zéro.

7. Filtre pare-flamme (F) selon la revendication 1 ou 6, **caractérisé en ce que** la tresse est une tresse à armure toile ou une tresse à armure sergé.

8. Filtre pare-flamme (F) selon l'une quelconque des revendications 1 à 7, **caractérisé en ce que**, pour un nombre n de séquences de couches (S1, S2, S3) présentes supérieur à 1, au moins deux deuxièmes couches de filtre (2) disposées de manière adjacente sont décalées l'une par rapport à l'autre.

9. Filtre pare-flamme (F) selon la revendication 8, **caractérisé en ce qu'**au moins deux deuxièmes couches de filtre (2) disposées de manière adjacente sont disposées en étant tournées l'une par rapport à l'autre d'un angle (β), choisi dans une plage angulaire supérieure à 0° jusqu'à 90° inclus, et/ou les deuxièmes couches de filtre (2) sont disposées en étant décalées l'une par rapport à l'autre d'une distance dans une direction orientée parallèlement aux surfaces latérales des couches de filtre (1, 2).

10. Agencement (10) d'au moins deux filtres pare-flamme (F1, F2) selon l'une quelconque des revendications 1 à 9, **caractérisé en ce que** tous les filtres pare-flamme (F1, F2) sont disposés le long de l'axe commun (7).

11. Agencement (10) selon la revendication 10, **caractérisé en ce qu'**au moins deux filtres pare-flamme (F1, F2) disposés de manière adjacente sont en contact direct l'un avec l'autre.

12. Utilisation d'un filtre pare-flamme (F) selon l'une quelconque des revendications 1 à 9 ou d'un agencement (10) selon l'une quelconque des revendications 10 ou 11 pour empêcher un claquage et pour dépressuriser après une augmentation de la pression du gaz.

13. Utilisation d'un filtre pare-flamme (F) selon l'une quelconque des revendications 1 à 9 ou d'un agencement (10) selon l'une quelconque des revendications 10 ou 11 comme filtre pour filtrer des fluides.

14. Utilisation d'un filtre pare-flamme (F) selon l'une quelconque des revendications 1 à 9 ou d'un agencement (10) selon l'une quelconque des revendications 10 ou 11 pour des dispositifs de signalisation acoustique destinés à isoler de l'environnement les sources sonores en tant que sources d'inflammation potentielles, le son émis pouvant effectivement traverser le filtre pare-flamme (F) sous forme d'onde de pression (11).

15. Boîtier antidéflagrant (9) comprenant au moins un filtre pare-flamme (F) selon l'une quelconque des revendications 1 à 9.
